# EUROPEAN PATENT SPECIFICATION

(11) **EP 1 738 977 B1**
(45) Date of publication and mention of the grant of the patent: **29.10.2008**
(21) Application number: 06011505.2
(22) Date of filing: 02.06.2006
(51) Int. Cl.: B60R 22/44

(54) **Seat belt retractor, seat belt apparatus and vehicle with a seat belt apparatus**
Sicherheitsgurtaufroller, Sicherheitsgurteinrichtung und Fahrzeug mit einer Sicherheitsgurteinrichtung
Enrouleur de ceinture de sécurité, dispositif de ceinture de sécurité et un vehicule avec un dispositif de ceinture de sécurité

(30) Priority: 28.06.2005 JP 2005188473
(43) Date of publication of application: 03.01.2007
(73) Proprietor: TAKATA CORPORATION, Minato-ku, Tokyo 106-8510 (JP)
(72) Inventor: Tanaka, Koji, Minato-ku Tokyo 106-8510 (JP)
(74) Representative: Vossius & Partner

(56) References cited:
- EP-A2- 1 074 439
- WO-A-99/51469
- DE-A1- 10 204 477
- DE-A1- 19 731 689

## Description

The present invention relates to a technology for developing a seat belt retractor to be installed in a vehicle.

Conventionally, a seat belt apparatus is known, which is structured to protect an occupant in a vehicle by a seat belt (webbing) restraining the occupant. For example, WO 01/14176 A1 discloses a structure of a seat belt retractor of a seat belt apparatus, in which a spool (winding shaft) can be rotated for winding and unwinding of a seat belt by an electric motor.

The technology described in WO 01/14176 A1 proposes a possibility of using an electric motor to conduct the seat belt winding action of the spool, as a structure of the seat belt retractor. When this structure is used for control (seat belt storing control) of winding up the seat belt in order to prevent the seat belt from being kept in the unwound state, it is desired to reasonably control the seat belt winding action by the electric motor.

Specifically, the original purpose of the seat belt storing control is to prevent a seat belt which is kept in the unwound state or a tongue attached to the seat belt from being caught by a vehicle door. If, in addition, the behavior of the vehicle door as an object which catches the seat belt or the tongue is reflected at least in control for the seat belt winding action, rational sophisticated (detailed) control is enabled. The inventor of the present invention focused attention on the behavior of the vehicle door during the seat belt winding control and came up with a structure capable of changing the mode of the seat belt winding action based on the behavior of the vehicle door.

DE-A1-197 31 689 provides an arrangement that rolls the safety belt onto a spool roller rotatably mounted on a frame in a motor vehicle. An electric motor is coupled to the spool roller in both directions of rotation to apply adjustable torque to the roller depending on defined driving situations. A transmission between the electric motor and the spool roller can be controlled, depending on sensor signals, into different switching positions for belt comfort, with a limited restraining force being exerted by the belt and tightening of the belt.

A seat belt apparatus according to the preamble of claim 1 is known from GB 2 335 890.

It is an object of the present invention to provide a technology of a seat belt retractor to be installed in a vehicle which relates to the seat belt winding action using an electric motor for preventing a seat belt from being kept in the unwound state and which is effective for rationalizing the seat belt winding action. This object is achieved with the features of the claims.

The present invention can be typically adopted to a seat belt retractor to be installed in an automobile. In addition, the present invention can be adopted to a technology for developing a seat belt retractor to be installed in a vehicle other than the automobile, such as aircraft, boat, train, and bus.

The first aspect of the present invention for achieving the aforementioned object is a seat belt retractor claimed in claim 1.

The seat belt retractor claimed in claim 1 is a device to be installed in a vehicle and comprises at least an electric motor, a spool, and a control means.

The spool of this invention is a member which is operated in association with the driving of the electric motor to wind or unwind a seat belt for occupant restraint. The seat belt capable of being wound onto and unwound from the spool is a long belt to be worn by a vehicle occupant seated in a seat and is sometimes called "webbing". Typically, the vehicle occupant seated in the vehicle seat is restrained by the seat belt when restraint is required such as a vehicle collision. In the present invention, if required, a power transmission mechanism may be suitably disposed between the electric motor and the spool to selectively achieve a connected state where the electric motor and the spool are connected and a disconnected state where the connected state is cancelled. Also in the present invention, the seat belt winding action by the spool may be conducted only by the driving force of the electric motor or by the winding force of an elastic member such as a return spring which acts on the spool and the driving force of the electric motor as secondary force.

The control means of the present invention is adapted at least as a means for controlling the driving of the electric motor and controls the driving direction, the driving time, and the output of the electric motor. The control means typically comprises a CPU (central processing unit), an input/output unit, a storage unit, a peripheral unit, and the like. The control means may be provided exclusively for the seat belt retractor or used also for other control means for controlling driving system and/or electric system.

Specifically, in cases that starting condition which is defined by the state of the seat belt relative to a vehicle occupant and the state of a vehicle door corresponding to the seat belt is satisfied, the control means of the present invention controls the electric motor to rotate in the belt winding direction such that the motor output of the electric motor is varied according to the satisfaction pattern of the starting condition. That is, in the present invention, the start of the winding of the seat belt depends on the combination of the state of the seat belt (the worn state or the released state) and the state of the vehicle door (the open state or the closed state). The motor output of the electric motor is varied according to the satisfaction pattern of the starting condition. The satisfaction patterns of the starting condition may be suitably set according to the combination of the state of the seat belt and the state of the vehicle door and the satisfying order. The number of the satisfaction patterns can be set according to need. Because the motor output of the electric motor is the product of current value (sometimes referred to as "control current value") and voltage value (sometimes referred to as "applied voltage value"), the motor output can be changed by suitably changing the current value and/or the voltage value.

According to the invention with regard to the seat belt storing control by the seat belt retractor, the electric motor is used to conduct the seat belt winding action so as to reflect the state of the seat belt and the behavior of the vehicle door into the control for the seat belt winding action as well as prevent the seat belt from being kept in the unwound state. Therefore, the present invention provides a seat belt retractor capable of providing rational sophisticated (detailed) control with regard to seat belt winding action using the electric motor.

In particular, the control means claimed in claim 1 or 2 controls the electric motor to rotate in the belt winding direction with a first motor output in cases where the vehicle door corresponding to the seat belt is in the closed state when the wearing of said seat belt is cancelled. On the other hand, the control means of this invention controls the electric motor to rotate in the belt winding direction with a second motor output larger than said first motor output in cases where the vehicle door corresponding to the seat belt is in the open state when the wearing of the seat belt is cancelled. In cases where the vehicle door is in closed state when the wearing of the seat belt is cancelled, there must be relatively long time until the vehicle door is closed again once it is opened. Therefore, in this case, the control in which the motor output of the motor is set to a relatively small output or the electric motor is not driven can be conducted in order to gently wind up the seat belt for the vehicle occupant. On the other hand, in case of the vehicle door is already in the open state when the wearing of the seat belt is cancelled, there must be short time until the vehicle door is closed. Therefore, in this case, the control in which the motor output of the electric motor is set to relatively large output is needed in order to rapidly wind up the seat belt.

Accordingly, the invention claimed in claim 1 relates to the seat belt storing control by the seat belt retractor and has a structure capable of varying the motor output according to the state of the vehicle door when the wearing of the seat belt is cancelled, thereby enabling rational sophisticated control with regard to the seat belt winding action.

In the present invention, the first motor output and the second motor output are set such that the second motor output is larger than the first motor output. The first motor output may be set to a predetermined value lower than that of the second motor output (including such a motor output that the spool is not rotated) or zero (the motor does not output).

In the seat belt retractor claimed in claims 2 or 3, the control means controls the electric motor to rotate in the belt winding direction in cases where the wearing of the seat belt is cancelled when the vehicle door corresponding to the seat belt is changed from the closed state to the open state. On the other hand, the control means controls the electric motor not to rotate in cases where the seat belt is worn when the vehicle door corresponding to the seat belt is changed from the closed state to the open state. That is, in cases where the wearing of the seat belt is cancelled immediately after the vehicle door is opened, it is more likely that the vehicle door will not be closed for a while. Therefore, in this case, the control in which the motor output of the motor is set to a relatively low output can be conducted in order to gently wind up the seat belt for the vehicle occupant. On the other hand, in cases where the seat belt is in the worn state, the seat belt winding action is not required.

Accordingly, the invention claimed in claim 2 or 3 relates to the seat belt storing control by the seat belt retractor and has a structure capable of varying the motor output according to the state of the seat belt when the vehicle door is changed from the closed state to the open state, thereby enabling rational sophisticated control with regard to the seat belt winding action.

In the seat belt retractor claimed in claim 4, in cases that the wearing of the seat belt on the vehicle occupant is cancelled, the control means claimed in claim 1, 2 or 3, controls the electric motor to rotate in the belt winding direction such that the motor output of the electric motor is varied according to the state of the vehicle door corresponding to the seat belt.

By the way, if a seat belt is kept in a state withdrawn from a spool in a seat belt retractor of this kind, there is a risk of occurrence of such a trouble that the seat belt itself or a tongue attached to the seat belt is caught by the vehicle door. In order to prevent such a trouble, the seat belt retractor is desired to have such a structure as to conduct the seat belt winding action (seat belt storing action) for actively winding a withdrawn seat belt onto a spool using an electric motor. In addition, by reflecting the behavior of the vehicle door as an object catching the seat belt into the control for the seat belt winding action, rational sophisticated (detailed) control is enabled.
According to the present invention, in cases where the wearing of the seat belt on the vehicle occupant is cancelled, the electric motor is controlled to rotate in the belt winding direction such that the motor output of the electric motor is varied based on the state of the vehicle door corresponding to the seat belt (satisfaction pattern of the starting condition). Timing for driving the electric motor to rotate in the belt winding direction may be at a time when the wearing of the seat belt is cancelled or a time when it is detected that the wearing of the seat belt is already cancelled.

The present invention is based on the premise that the original purpose of the seat belt winding action (seat belt storing control) is to prevent the seat belt which is kept in the unwound state or the tongue attached to the seat belt from being caught by the vehicle door so that the reflection of the behavior of the vehicle door as a direct object of catching the seat belt and the tongue is effective for rational sophisticated control. In this case, the speed and time until the seat belt winding action by the electric motor is completed can be set based on the degree of time until the vehicle door is closed.

Specifically, when there is long time until the vehicle door is closed, the control in which the motor output of the electric motor is set to relatively small output or the electric motor is not driven can be conducted in order to gently wind up the seat belt for the vehicle occupant. On the other hand, when there is short time until the vehicle door is closed, the control in which the motor output of the electric motor is set to relatively large output is needed in order to rapidly wind up the seat belt. The electric motor is controlled to rotate in the belt winding direction, thereby preventing the seat belt from being kept in the unwound state.

Accordingly, the invention claimed in claim 4 relates to the seat belt storing control by the seat belt retractor and enables rational sophisticated control with regard to the seat belt winding action.

The seat belt apparatus claimed in claim 5 is an apparatus to be installed in a vehicle and comprises at least a seat belt for occupant restraint, an electric motor, a spool, a control means, a seat belt buckle, a tongue, and a detection sensor.

The seat belt of the present invention is a long belt to be worn by a vehicle occupant seated in a seat and is sometimes called "webbing". Typically, the vehicle occupant seated in the vehicle seat is restrained by the seat belt when restraint is required such as a vehicle collision. The seat belt buckle of the present invention is a member fixed to a vehicle body. The tongue of the present invention is a member which is attached to the seat belt and is latched to the buckle when the seat belt is worn by the vehicle occupant. The detection sensor of the present invention is a means for detecting that the tongue is latched to the buckle.

The control means of the present invention determines whether or not the seat belt is worn by a vehicle occupant based on information detected by the detection sensor. In cases where starting condition which is defined by the state of the seat belt relative to the vehicle occupant and the state of a vehicle door corresponding to the seat belt is satisfied, the control means controls the electric motor to rotate in the belt winding direction such that the motor output of the electric motor is varied according to the satisfaction pattern of the starting condition.
The electric motor and the spool of this invention have substantially the same functions as those of the seat belt retractor claimed in claim 1 or 3.

Accordingly, the invention claimed in claim 5 relates to the seat belt storing control by the seat belt apparatus and can prevent the seat belt from being kept in the unwound state by using the electric motor for the belt winding action and can reflect the state of the seat belt and the behavior of the vehicle door into the control for the seat belt winding action. Accordingly, the invention provides a seat belt retractor capable of conducting rational sophisticated (detailed) control with regard to the seat belt winding action using the electric motor.

The sixth aspect of the present invention for achieving the aforementioned object is a seat belt apparatus as claimed in claim 6.
In the seat belt apparatus claimed in claim 6, in cases where the wearing of the seat belt is cancelled, the control means claimed in claim 5 controls the electric motor to rotate in the belt winding direction such that the motor output of the electric motor is varied according to the state of the vehicle door corresponding to the seat belt.

Accordingly, the invention claimed in claim 6 has substantially the same function and effects as those of the invention claimed in claim 4. This invention relates to the seat belt storing control by the seat belt apparatus and enables rational sophisticated control with regard to the seat belt winding action.

The seventh aspect of the present invention for achieving the aforementioned object is a seat belt apparatus as claimed in claim 7.
In the seat belt apparatus claimed in claim 7, the control means claimed in claim 5 or 6 controls the electric motor to rotate in the belt winding direction with a first motor output in cases where the vehicle door corresponding to the seat belt is in the closed state when it is determined that the wearing of the seat belt is cancelled based on the information detected by the detection sensor. On the other hand, the control means controls the electric motor to rotate in the belt winding direction with a second motor output larger than the first motor output in cases where the vehicle door corresponding to the seat belt is in the open state when it is determined that the wearing of the seat belt is cancelled based on the information detected by the detection sensor.

Therefore, the invention claimed in claim 7 has substantially the same functions and effects as those of the invention claimed in claim 1. This invention relates to the seat belt storing control by the seat belt apparatus and enables rational sophisticated control with regard to the seat belt winding action.

The eighth aspect of the present invention for achieving the aforementioned object is a seat belt apparatus as claimed in claim 8.

In the seat belt apparatus claimed in claim 8, the control means claimed in any one of claims 5 through 7 controls the electric motor to rotate in the belt winding direction in cases where it is determined that the wearing of said seat belt is cancelled based on the information detected by said detection sensor when the vehicle door corresponding to the seat belt is changed from the closed state to the open state. On the other hand, the control means controls said electric motor not to rotate in cases where it is determined that the seat belt is worn based on the information detected by said detection sensor.

Accordingly, the invention claimed in claim 8 has substantially the same works and effects as those of the invention claimed in claims 2 or 3. This invention relates to the seat belt storing control by the seat belt apparatus and enables rational sophisticated control with regard to the seat belt winding action.

The ninth aspect of the present invention for achieving the aforementioned object is a vehicle with a seat belt apparatus claimed in claim 9.
The vehicle with a seat belt apparatus claimed in claim 9 comprises at least a seat belt apparatus as claimed in any one of claims 5 through 8. In the vehicle of the present invention, the seat belt apparatus is accommodated in an accommodating space in the vehicle such as an accommodating space in a pillar, an accommodating space in a seat, or an accommodating space in another part of the vehicle.

Accordingly, the invention claimed in claim 9 provides a vehicle comprising a seat belt apparatus which uses an electric motor for the seat belt winding action so as not only to prevent the seat belt from being kept in the unwound state but also to reflect the behavior of a vehicle door into the control for the seat belt winding action, wherein the seat belt apparatus is accommodated in an accommodating space in the vehicle.

As described in the above, the present invention relates to a structure of a seat belt retractor in which a spool operates in association with the driving of an electric motor to wind and unwind a seat belt for occupant restraint and provides such control as to enable rationalization of the seat belt winding action. That is, in cases where starting condition which is defined by the state of the seat belt relative to the vehicle occupant and the state of a vehicle door corresponding to the seat belt is satisfied, an electric motor is controlled to rotate in the belt winding direction such that the motor output of the electric motor is varied according to the satisfaction pattern of the starting condition, thereby enabling the rationalization of the seat belt action.

Hereinafter, embodiments of the present invention will be described in detail with reference to drawings.
Fig. 1 is an illustration showing the structure of a seat belt apparatus 100 as an embodiment of "the seat belt apparatus" according to the present invention;
Fig. 2 is an illustration showing the schematic structure of a seat belt retractor 1 shown in Fig. 1;
Fig. 3 is a flow chart showing the retractor control process A according to the embodiment;
Fig. 4 is a flow chart showing the retractor control process B according to the embodiment; and
Fig. 5 is a flow chart showing the retractor control process C according to the embodiment.
First, description will be made as regard to an embodiment of the present invention with reference to Fig. 1 and Fig. 2.

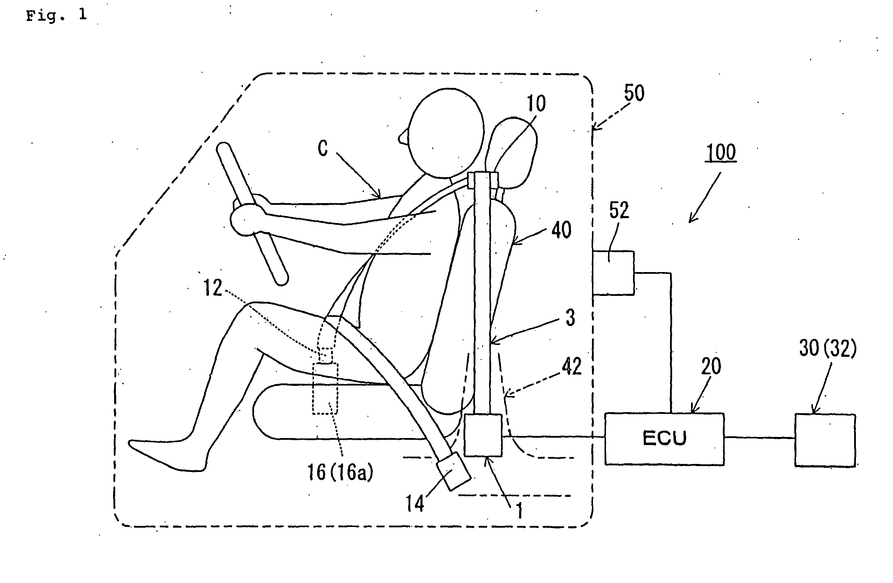

As shown in Fig. 1, the seat belt apparatus 100 of this embodiment is a seat belt apparatus for a vehicle to be installed in an automotive vehicle as "a vehicle with a seat belt apparatus" of the present invention. the seat belt apparatus 100 mainly comprises a seat belt retractor 1, a seat belt 3, a deflection fitting 10, a tongue 12, an outer anchor 14, a seat belt buckle 16, and an ECU 20. In addition, an input element 30 is installed in the vehicle to detect information about collision prediction or collision occurrence of the vehicle, information about the driving state of the vehicle, information about the sitting position and the body size of a vehicle occupant seated in a vehicle seat, information about traffic conditions around the vehicle, information about weather condition and about time zone, and the like and to input such detected information to the ECU 20. The detected information of the input element 30 is transmitted to the ECU 20 anytime or at predetermined intervals and is used for the operation control of the seat belt apparatus 100 and the like.

The input element 30 of this embodiment includes a vehicle collision information detection sensor 32 for detecting information about a vehicle collision such as a prediction of a vehicle collision and an occurrence of actual vehicle collision. The vehicle collision information detection sensor 32 is a sensor capable of detecting (measuring) distance, speed, and acceleration of a collision object (a vehicle, obstacle, pedestrian, or the like) relative to the subject vehicle and also detecting (measuring) accelerations in three-axial (X-axis, Y-axis, and Z-axis) directions acting on the subject vehicle. The vehicle collision information detection sensor 32 may be composed of a single detection sensor or a combination of plural detection sensors. Specifically, millimeter wave radar, laser radar, acceleration sensor, and camera sensor may be used in the vehicle collision information detection sensor 32.

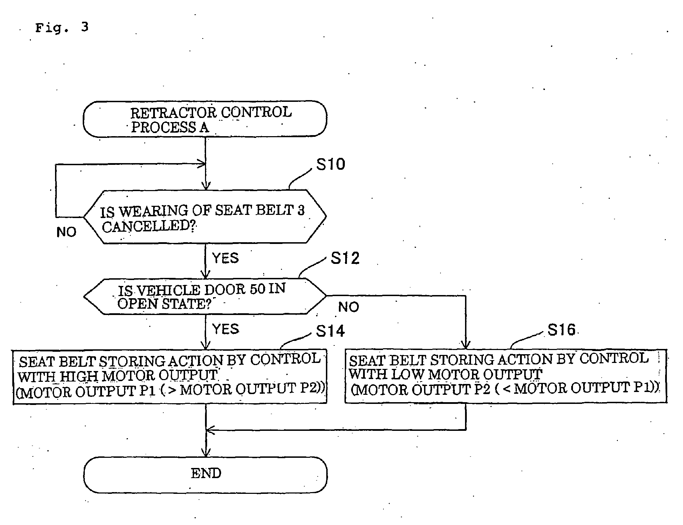

In this embodiment, a vehicle door sensor 52 mounted on the vehicle is adapted to detect the opening/closing state of a vehicle door 50. For example, a contact sensor which comprises a first contact on the vehicle door side and a second contact on a vehicle pillar side and can detect the opening/closing of the vehicle door according to the contact between the first contact and the second contact may be employed as the vehicle door sensor 52. The vehicle door sensor 52 may be considered as a component of the seat belt retractor 1 or the seat belt apparatus 100. The information detected by the vehicle door sensor 52 is transmitted to the ECU 20 and is used for "retractor control processes A-C" as will be described later with regard to Figs. 3-5.

The seat belt 3 is a long belt (webbing) to be used for restraining a vehicle occupant C (sometimes referred to as "driver") seated in a vehicle seat 40 as a driver's seat. The seat belt 3 corresponds to the "seat belt for occupant restraint" of the present invention. The seat belt 3 is withdrawn from the seat belt retractor 1 fixed relative to the vehicle and extends through a deflection fitting 10 provided around an area about the shoulder of the vehicle occupant C and is connected to an outer anchor 14 through a tongue 12. The deflection fitting 10 has a function of holding the seat belt 3 to the area about the shoulder of the occupant C and guiding the seat belt 3. By inserting the tongue 12 to a seat belt buckle 16 fixed to the vehicle body, the seat belt 3 becomes into the state worn by the vehicle occupant C. The tongue 12 corresponds to the "tongue" of the present invention and the seat belt buckle 16 to which the tongue 12 can be latched corresponds to the "seat belt buckle" of the present invention.

The seat belt buckle 16 has a built-in buckle switch 16a. The buckle switch 16a detects that the tongue 12 is inserted into the seat belt buckle 16 so as to connect the seat belt to the seat belt buckle (actually, detects that the seat belt becomes into the worn state). The information detected by the buckle switch 16a is transmitted to the ECU 20 which determines whether or not the seat belt 3 is in the worn state. The buckle switch 16a corresponds to the "detection sensor for detecting that the tongue is latched to the seat belt buckle" of the present invention.

The seat belt retractor 1 is a device capable of performing the action of winding or unwinding the seat belt 3 via a spool 5 and a motor 7 which will be described later and corresponds to the "seat belt retractor" of the present invention. The retractor 1 is installed in an accommodating space in a B-pillar 42 of the vehicle in the embodiment shown in Fig. 1.

The ECU 20 has a function of conducting the control of the seat belt retractor 1 and other operational mechanisms based on the input signals from the input element 30 and comprises a CPU (Central processing unit), an input/output unit, a storage unit, a peripheral unit, and the like. Particularly in this embodiment, the ECU 20 controls the motor 7, which will be described later, of the seat belt retractor 1. Specifically, the ECU 20 controls the amount of current supplied to an electromagnetic coil of the motor 7 and the direction of the current supply so as to vary the rotational speed, the rotational direction, the rotational period of time, and the rotational torque (output) of a shaft of the motor 7. The ECU 20 is structured as a means for controlling the driving of the motor 7 and controlling a power transmission mechanism 9, which will be described later, to switch between the state where the power of the motor 7 is transmitted to the spool 5 and the state where the power is not transmitted to the spool 5. The details will be described later. Further, the ECU 20 is also provided with a function of detecting (measuring) the current value of the motor 7 in operation. The ECU 20 corresponds to the "control means" of the present invention.
The ECU 20 may be exclusive to the seat belt retractor 1 or used also for other control means for controlling driving system and/or electric system.

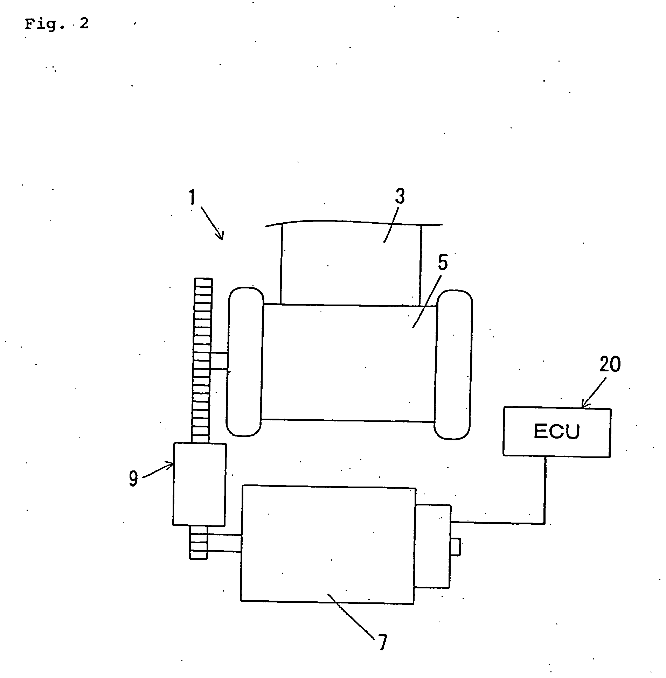

The spool 5 as shown in Fig. 2 is formed in a columnar or cylindrical shape of which outer periphery (seat belt contact face) functions as the wind-up surface on which the seat belt 3 is wound. The spool 5 is a member for performing the winding action and unwinding action of the seat belt 3 for occupant restraint in association with the driving of the motor 7 as the "electric motor" of the present invention and corresponds to the "spool" of the present invention.

In this embodiment, the power transmission mechanism 9 is arranged between the spool 5 and the motor 7. The power transmission mechanism 9 is a mechanism capable of taking a connected state where the spool 5 and the motor 7 are connected (power transmission operation mode) and a disconnected state where the connected state is cancelled (power transmission disconnection mode). The power transmission mechanism 9 is sometimes referred to as so-called "clutch" which comprises a combination of gears. The connected state of the power transmission mechanism 9 is a state where the power of the motor 7 is allowed to be transmitted to the spool via the power transmission mechanism 9. When the motor 7 is driven in this connected state, the power of the motor 7 is transmitted to the spool 5 via the power transmission mechanism 9. During this, the rotational speed of the motor 7 is reduced by the power transmission mechanism 9. On the other hand, in the disconnected state of the power transmission mechanism 9, the physical connection between the spool 5 and the motor 7 is cancelled so as to allow the easy unwinding (withdrawing) of the seat belt 3 from the spool 5. It should be noted that the spool 5 and the motor 7 may be directly connected without the power transmission mechanism 9 disposed between the spool 5 and the motor 7, if required.

In this embodiment, the power transmission mechanism 9 is constructed as a so-called "single-stage clutch", but not illustrated. Accordingly, when the motor 7 is driven with a predetermined motor output in the power transmission operation mode of the power transmission mechanism 9, the rotation of the motor 7 is transmitted to the spool 5 with the rotational speed being reduced so that the spool 5 is driven to rotate with predetermined torque at predetermined rotational speed.
Instead of the power transmission mechanism 9, a power transmission mechanism capable of changing the rotational torque and the rotational speed of the spool into several stages may be employed. For example, in case of a two-stage clutch capable of changing the rotational torque and the rotational speed of the spool into two stages, the power transmission mechanism can be set in a high-reduction ratio mode with relatively high rotational torque and relatively low rotational speed in order to respond to a need for winding of the seat belt onto the spool with large belt tension. On the other hand, the power transmission mechanism can be set in a low-reduction ratio mode with relatively low rotational torque and relatively high rotational speed in order to respond to a need for rapid winding of the seat belt onto the spool.

In this embodiment, the seat belt retractor 1 of this embodiment has the following seven seat belt control modes of the seat belt 3. Based on these seat belt control modes, the control of the motor 7 and the power transmission mechanism 9 are performed by the ECU 20.

### (1) Belt storage mode

Belt storage mode is a control mode in which the seat belt 3 is not used and fully wound onto the spool 5. In the seat belt retractor 1 in the belt storage mode, the motor 7 is not driven and the power transmission mechanism 9 is set to the power transmission disconnection mode. Therefore, only very weak belt tension is applied to the seat belt 3 and the power consumption is zero.]

### (2) Belt withdrawing mode

Belt withdrawing mode is a control mode in which the seat belt 3 is withdrawn from the spool 5 so as to be worn by the occupant. The seat belt retractor 1 in the belt withdrawing mode is also set in the power transmission disconnection mode. Therefore, the seat belt 3 can be withdrawn with small force. Also in this case, the motor 7 is not driven so that the power consumption is zero.

### (3) Belt winding and fitting mode

Belt winding and fitting mode is a control mode in which after the seat belt 3 is withdrawn and the tongue (the tongue 12 in Fig. 1) is inserted into and latched with the seat belt buckle to turn ON the buckle switch (the buckle switch 16a in Fig. 1), excessively withdrawn part of the seat belt 3 is wound in order to fit the seat belt 3 to the occupant. In addition, the belt winding and fitting mode is a control mode in which when the occupant moves so as to withdraw a predetermined amount of the seat belt 3 from the normally used state of the seat belt 3 (at this point, the buckle switch is in the ON state) and then the occupant returns to the original position, the withdrawn part of the seat belt 3 is wound. In the seat belt retractor 1 in the belt winding and fitting mode, the motor 7 is driven to rotate at high rotational speed in the belt winding direction and the power transmission mechanism 9 is set to the power transmission operation mode. Therefore, the seat belt 3 is rapidly wound onto the spool 5 and then the motor 7 is stopped when very small predetermined belt tension is generated, whereby the seat belt 3 is worn by and fitted to the occupant.

### (4) Normal wearing mode (comfortable mode)

Normal wearing mode (comfortable mode) is a control mode in which the occupant wears the seat belt 3 in the normal state after the belt winding and fitting mode is terminated. In the seat belt retractor 1 in the normal wearing mode, the motor 7 is not driven and the power transmission mechanism 9 is set in the power transmission disconnection mode. Therefore, only very weak belt tension is applied to the seat belt 3 so that the vehicle occupant can wear the seat belt 3 without any stress. In addition, the power consumption is zero.

### (5) Warning mode

Warning mode is a control mode in which when dozing of the driver or an obstacle around the subject vehicle is detected with the seat belt being in the normal wearing mode during running, the seat belt 3 is wound repeatedly predetermined times so as to warn the driver. In the seat belt retractor 1 in the warning mode, the motor 7 is controlled to be driven repeatedly. Therefore, the operation of applying relatively strong belt tension (but which is weaker than that of the belt tension during the emergency mode as will be described later) and very weak belt tension onto the seat belt 3 is alternately repeated, thereby drawing the driver's attention to the dozing and the obstacle around the vehicle.

### (6) Emergency mode

Emergency mode is a control mode which is set when the vehicle extremely likely have a collision with an obstacle or the like during running in the normal wearing mode or following the aforementioned warning mode. In the seat belt retractor 1 in the emergency mode, the power transmission mechanism 9 is set in the power transmission operation mode and the motor 7 is controlled to rotate at high rotational speed with high rotational torque in the belt winding direction. Therefore, the motor 7 is stopped when predetermined extremely strong belt tension is generated on the seat belt 3 after the seat belt 3 is rapidly wound onto the spool 5, thereby securely restraining the vehicle occupant with the seat belt 3.

### (7) Belt winding and storing mode

Belt winding and storing mode is a control mode in which the seat belt 3 is fully wound to be in the storage state. In the seat belt retractor 1 in the belt winding and storing mode, the power transmission mechanism 9 is set to the power transmission operation mode and the motor 7 is controlled to rotate in the belt winding direction. Accordingly, the withdrawn seat belt 3 is promptly wound onto the spool 5. Thus, the motor 7 is stopped when the seat belt 3 is fully wound and a predetermined belt tension which is very weak is developed, whereby the seat belt 3 becomes to the belt storage mode in which the aforementioned very weak belt tension is applied to the seat belt 3.

With regard to the belt winding and storing mode, in this embodiment, the behavior of the vehicle door 50 as an object which catches the seat belt 3 or the tongue 12 is reflected at least in control for the seat belt winding action so as to achieve rational sophisticated control. The control in the belt winding and storing mode according to this embodiment is based on the premise that the original purpose of the seat belt winding action (seat belt storing control) is to prevent the seat belt 3 which is kept in the unwound state or the tongue 12 from being caught by the vehicle door 50. This control is conducted according to, for example, "retractor control process (seat belt storing control process)" as shown in Fig. 3 through Fig. 5 by the control means (the ECU 20 in Fig. 1 and Fig. 2).

### Retractor control process A

Fig. 3 is a flow chart of the retractor control process A according to this embodiment.
In the retractor control process A shown in Fig. 3, in step S10, it is determined whether or not the seat belt (the seat belt 3 in Fig. 1) is changed from the worn state to the released state. Specifically, based on the information detected by the buckle switch 16a for detecting the insertion and latching of the tongue 12 to the seat belt buckle 16, it is determined that the seat belt 3 is changed from the worn state to the released state when the buckle switch 16a is changed from ON state to OFF state. This determination is achieved by the ECU 20 which detects the information from the buckle switch 16a. In the step S 10, the process continues until the seat belt 3 is changed from the worn state to the released state and proceeds to step S12 when it is determined that the seat belt 3 is changed from the worn state to the released state (YES in step S10).

In step S12, it is determined whether or not the vehicle door (the vehicle door 50 shown in Fig. 1) is in the open state. Specifically, based on the information detected by the vehicle door sensor 52 shown in Fig. 1, it is determined that the vehicle door 50 is in the open state when the vehicle door sensor is ON. This determination is achieved by the ECU 20 which detects the information from the vehicle door sensor 52. In the step 12, the process proceeds to step S14 when it is determined that the vehicle door 50 is in the open state (YES in step S12) and proceeds to step S16 if not, i.e. when it is determined that the vehicle door 50 is in the closed state (NO in step S12).

In step S 14, the seat belt winding control (seat belt storing control) with the motor 7 in the high power output control (motor output P1) is conducted. In step S16, the seat belt winding control (seat belt storing control) with the motor 7 in the low power output control (motor output P2 < P1) is conducted.

Specifically, in cases where the vehicle door 50 is already in the open state when the wearing of the seat belt is cancelled, there must be only very short time until the vehicle door 50 is closed. Therefore, in this case, the control in which the motor output of the motor 7 is set to the motor output P1 is conducted in step S 14 in order to rapidly wind up the seat belt 3. On the other hand, in cases where the vehicle door 50 is in closed state when the wearing of the seat belt is cancelled, there must be relatively long time until the vehicle door 50 is closed again once it is opened. Therefore, in this case, the control in which the motor output of the motor 7 is set to the motor output P2 is conducted in step S16 in order to gently wind up the seat belt 3 for the vehicle occupant C. That is, the control in step S14 and the control in step S16 are different from each other in the motor output of the motor 7.

In the control in step S 14 and step S16, the power transmission mechanism 9 of the seat belt retractor 1 is set in the power transmission operation mode and the motor 7 is driven to rotate in the belt winding direction. Since the motor output of the motor 7 is the product of current value (sometimes referred to as "control current value") and voltage value (sometimes referred to as "applied voltage value"), the motor output can be changed by suitably changing the current value and/or the voltage value.

With regard to the retractor control processes A-C of this embodiment, the seat belt winding action in the belt winding and storing mode may be conducted only by the driving force of the motor 7 or by the winding force of an elastic member such as a return spring which acts on the spool 5 and the driving force of the motor 7 as secondary force.

According to the retractor control process A, rational sophisticated (detailed) control for the seat belt winding action is achieved by changing the motor output of the motor 7 according to the state of the vehicle door 50 when the wearing of the seat belt 3 is cancelled (satisfaction pattern of starting condition) in the seat belt storing control. The retractor control process A corresponds to "control mode" described in claim 1 through claim 7.

### Retractor control process B

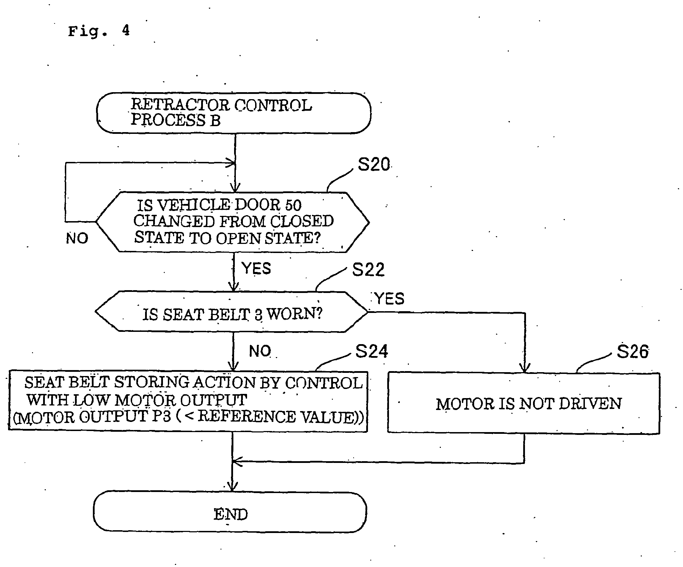

Fig. 4 is a flow chart of the retractor control process B according to this embodiment.
In the retractor control process B shown in Fig. 4, in step S20, it is determined whether or not the vehicle door (the vehicle door 50 in Fig. 1) is changed from the closed state to the open state. Specifically, based on the information detected by the vehicle door sensor 52 shown in Fig. 1, it is determined that the vehicle door 50 is changed from the closed state to the open state when the vehicle door sensor 52 is changed from OFF state to ON state. This determination is achieved by the ECU 20 which detects the detected information from the vehicle door sensor 52. In the step S20, the process continues until the vehicle door 50 is changed from the closed state to the open state and proceeds to step S22 when it is determined that the vehicle door 50 is changed from the closed state to the open state (YES in step S20).

In step S22, it is determined whether or not the seat belt (the seat belt 3 in Fig. 1) is changed from the worn state to the released state. Specifically, based on the information detected by the buckle switch 16a for detecting the insertion and latching of the tongue 12 to the seat belt buckle 16 shown in Fig. 1, it is determined that the seat belt 3 is in the worn state when the buckle switch 16a is in ON state. This determination is achieved by the ECU 20 which detects the information from the buckle switch 16a. In the step S22, the process proceeds to step S24 when it is determined that the seat belt 3 is in the released state (NO in step S22) and proceeds to step S26 when it is determined that the seat belt 3 is in the worn state (YES in step S22).

In step S24, the seat belt winding control (seat belt storing control) with the motor 7 in the low power output control (motor output P3) is conducted. In step S26, the seat belt winding control (seat belt storing control) by the motor 7 is not conducted. (The motor output is zero.) It should be noted that, even in step S26, the motor output of the motor 7 may be set to such a degree that the spool 5 is not rotated.

Specifically, in cases where the wearing of the seat belt 3 is cancelled just after the vehicle door 50 is opened, it is more likely that the vehicle door 50 will not be closed for a while. Therefore, in this case, the control in which the motor output of the motor 7 is set to the motor output P3 is conducted in step S24 in order to gently wind up the seat belt 3 for the vehicle occupant C. The motor output P3 can be suitably set to any degree within a range under a preset reference value. On the other hand, in cases where the seat belt 3 is in the worn state, the seat belt winding action is not required in step S26. That is, the control in step S24 and the control in step S26 are different from each other in the motor output of the motor 7.

In the control in step S24, the power transmission mechanism 9 of the seat belt retractor 1 is set in the power transmission operation mode and the motor 7 is driven with the motor output P3 to rotate in the belt winding direction. In the control in step S26, the power transmission mechanism 9 of the seat belt retractor 1 is set in the power transmission operation mode and the motor output of the motor 7 is set to zero or the power transmission mechanism 9 of the seat belt retractor 1 is set to the power transmission disconnection mode.

According to the retractor control process B, rational sophisticated (detailed) control for the seat belt winding action is achieved by changing the motor output of the motor 7 according to the state of the seat belt 3 when the vehicle door 50 is changed from the closed state to the open state (satisfaction pattern of starting condition) in the seat belt storing control. The retractor control process B corresponds to "control mode" described in claim 3 through claim 8.

### Retractor control process C

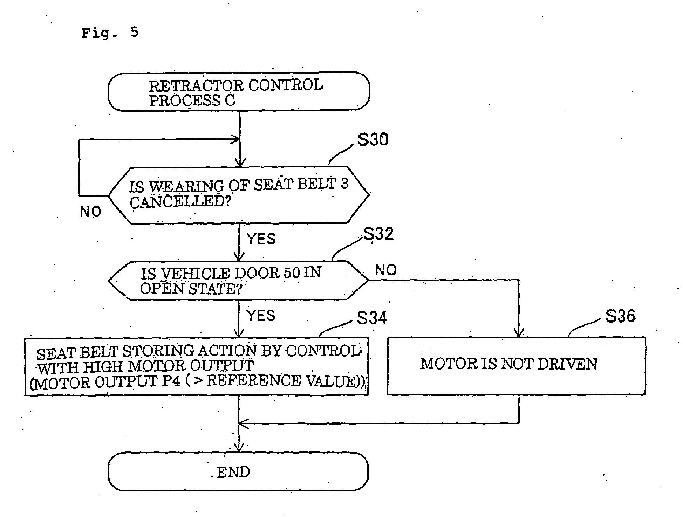

Fig. 5 is a flow chart of the retractor control process C according to this embodiment.
In the retractor control process C shown in Fig. 5, step S30 and step 32 are similar to step S10 and step S12 of the aforementioned retractor control A. When it is determined that the vehicle door 50 is in the open state in step S32 (YES in step S32), the process proceeds to step S34. If not, i.e. when it is determined that the vehicle door 50 is in the closed state (NO in step S32), the process proceeds to step S36.

In the step S34, the seat belt winding control (seat belt storing control) with the motor 7 in the high power output control (motor output P4) is conducted. In step S36, the seat belt winding control (seat belt storing control) by the motor 7 is not conducted. (The motor output is zero.) It should be noted that, even in step S36, the motor output of the motor 7 may be set to such a degree that the spool 5 is not rotated.

Specifically, in cases where the vehicle door 50 is already in the open state when the wearing of the seat belt 3 is cancelled, there must be only very short time until the vehicle door 50 is closed. Therefore, in this case, the control in which the motor output of the motor 7 is set to the high motor output P4 is conducted in step S34 in order to rapidly wind up the seat belt 3. The motor output P4 can be suitably set to any degree within a range over a preset reference value. On the other hand, in cases where the vehicle door 50 is in the closed state when the wearing of the seat belt is cancelled, there must be relatively long time until the vehicle door 50 is closed once it is opened so that the seat belt winding action is not required in step S36. That is, the control in step S34 and the control in step S36 are different from each other in the motor output of the motor 7.

In the control in step S34, the power transmission mechanism 9 of the seat belt retractor 1 is set in the power transmission operation mode and the motor 7 is driven with the motor output P4 to rotate in the belt winding direction. In the control in step S36, the power transmission mechanism 9 of the seat belt retractor 1 is set in the power transmission operation mode and the motor output of the motor 7 is set to zero or the power transmission mechanism 9 of the seat belt retractor 1 is set to the power transmission disconnection mode.

According to the retractor control process C, rational sophisticated (detailed) control for the seat belt winding action is achieved by changing the motor output of the motor 7 according to the state of the vehicle door 50 when the wearing of the seat belt 3 is cancelled (satisfaction pattern of starting condition) in the seat belt storing control. The retractor control process C corresponds to "control mode" described in claim 1 through claim 7.

Therefore, according to the embodiments, the present invention provides a seat belt retractor 1, a seat belt apparatus 100, and a vehicle with the seat belt apparatus 100 in which rational control for the seat belt winding action is achieved.

In the present invention, the aforementioned retractor control processes A through C may be employed independently. Alternatively, a first combination of the aforementioned retractor control process A and the aforementioned retractor control process B or a second combination of the aforementioned retractor control process B and the aforementioned retractor control process C may be employed. In the first combination, the motor output P2 in step S 16 and the motor output P3 in step S24 are set to be equal to each other.

In this embodiment, when starting condition which is defined by the state of the seat belt 3 relative to the vehicle occupant C and the state of the vehicle door 50 corresponding to the seat belt 3 is satisfied, the motor 7 is controlled to rotate in the seat belt winding direction such that the motor output of the motor 7 is varied according to the satisfaction pattern of the starting condition. That is, the start of winding of the seat belt 3 depends on the combination of the state of the seat belt 3 (the worn state or the released state) and the state of the vehicle door 50 (the open state or the closed state) and the motor output of the motor 7 is varied according to the satisfaction pattern of the starting condition. Satisfaction patterns of the starting condition may be suitably set according to the combination of the state of the seat belt 3 and the state of the vehicle door 50 and the satisfying order. The number of the satisfaction patterns can be set according to need.

The present invention is not limited to the aforementioned embodiment, so various variations and modifications may be made. For example, the following embodiments as variations of the aforementioned embodiment may be carried out.

The above embodiment has been described with regard to the seat belt retractor 1 to be installed in an automobile, the seat belt retractor of the present invention can be adopted to seat belt apparatuses to be installed in a vehicle for transfer of occupant(s) such as automobile, aircraft, boat, train, and bus.

## Claims

1. A seat belt retractor to be installed in a vehicle comprising:
an electric motor (7); a spool (5) which is capable of winding and unwinding a seat belt (3) for occupant restraint in association with the driving of said electric motor (7); and a control means (20) for controlling said electric motor (7), wherein
in cases where a starting condition which is defined by the state of said seat belt (3) relative to a vehicle occupant and the state of a vehicle door (50) corresponding to said seat belt (3) is satisfied, said control means (20) controls said electric motor (7) to rotate in the belt winding direction such that the motor output of said electric motor (7) is varied according to the satisfaction pattern of the starting condition,
**characterized in that**
in cases where the vehicle door (50) corresponding to the seat belt (3) is in the closed state when the wearing of said seat belt (3) is cancelled, said control means (20) controls said electric motor (7) to rotate in the belt winding direction with a first motor output (P2), while in cases where the vehicle door (50) corresponding to the seat belt (3) is in the open state when the wearing of said seat belt is cancelled, said control means controls said electric motor (7) to rotate in the belt winding direction with a second motor output (P1) larger than said first motor output (P2).

2. A seat belt retractor as claimed in claim 1, wherein in cases where the wearing of said seat belt (3) is cancelled when the vehicle door corresponding to the seat belt (3) is changed from the closed state to the open state, said control means (20) controls said electric motor (7) to rotate in the belt winding direction, while in cases where the seat belt (3) is worn when the vehicle door (50) corresponding to the seat belt is changed from the closed state to the open state, said control means (20) controls said electric motor (7) not to rotate.

3. A seat belt retractor to be installed in a vehicle comprising:
an electric motor (7); a spool (5) which is capable of winding and unwinding a seat belt (3) for occupant restraint in association with the driving of said electric motor (7); and a control means (20) for controlling said electric motor (7), wherein
in cases where a starting condition which is defined by the state of said seat belt (3) relative to a vehicle occupant and the state of a vehicle door (50) corresponding to said seat belt (3) is satisfied, said control means (20) controls said electric motor (7) to rotate in the belt winding direction such that the motor output of said electric motor (7) is varied according to the satisfaction pattern of the starting condition,
**characterized in that**
in cases where the wearing of said seat belt (3) is cancelled when the vehicle door corresponding to the seat belt (3) is changed from the closed state to the open state, said control means (20) controls said electric motor (7) to rotate in the belt winding direction, while in cases where the seat belt (3) is worn when the vehicle door (50) corresponding to the seat belt is changed from the closed state to the open state, said control means (20) controls said electric motor (7) not to rotate.

4. A seat belt retractor as claimed in claim 1, 2 or 3 wherein
in cases where the wearing of said seat belt (3) on the vehicle occupant is cancelled, said control means (20) controls said electric motor (7) to rotate in the belt winding direction such that the motor output of said electric motor (7) is varied according to the state of the vehicle door (50) corresponding to the seat belt (3).

5. A seat belt apparatus to be installed in a vehicle comprising:
a seat belt buckle (16) fixed to the vehicle; a tongue (12) which is attached to a seat belt (3) and is latched to said seat belt buckle (16) when said seat belt (3) is worn, a detection sensor (32) for detecting that said tongue (12) is latched to said seat belt buckle (16), and a seat belt retractor according to any one of claims 1 to 4, and wherein
in cases where starting condition which is defined by the state of said seat belt (3) relative to the vehicle occupant and the state of a vehicle door (50) corresponding to said seat belt (3) is satisfied, said control means (20) determines whether or not said seat belt (3) is worn by a vehicle occupant based on information detected by said detection sensor (32), and said control means (20) controls said electric motor (7) to rotate in the belt winding direction such that the motor output of said electric motor (7) is varied according to the satisfaction pattern of the starting condition.

6. A seat belt apparatus as claimed in claim 5, wherein
in cases where the wearing of said seat belt (3) is cancelled, said control means (20) controls said electric motor (7) to rotate in the belt winding direction such that the motor output of said electric motor (7) is varied according to the state of the vehicle door (50) corresponding to the seat belt (3).

7. A seat belt apparatus as claimed in claim 5 or 6, wherein
in cases where the vehicle door (50) corresponding to the seat belt (3) is in the closed state when it is determined that the wearing of said seat belt (3) is cancelled based on the information detected by said detection sensor (32), said control means (20) controls said electric motor (7) to rotate in the belt winding direction with a first motor output, while in cases where the vehicle door (50) corresponding to the seat belt (3) is in the open state when it is determined that the wearing of said seat belt (3) is cancelled based on the information detected by said detection sensor (32), said control means (20) controls said electric motor (7) to rotate in the belt winding direction with a second motor output larger than said first motor output.

8. A seat belt apparatus as claimed in any one of claims 5 through 7, wherein
in cases where it is determined that the wearing of said seat belt (3) is cancelled based on the information detected by said detection sensor (32) when the vehicle door (50) corresponding to the seat belt (3) is changed from the closed state to the open state, said control means (20) controls said electric motor (7) to rotate in the belt winding direction, while in cases where it is determined that the seat belt (3) is worn based on the information detected by said detection sensor (32) when the vehicle door (50) corresponding to the seat belt (3) is changed from the closed state to the open state, said control means (20) controls said electric motor (7) not to rotate.

9. A vehicle with a seat belt apparatus as claimed in any one of claims 5 through 8, wherein
said seat belt apparatus is accommodated in an accommodating space in the vehicle.

## Patentansprüche

1. Sicherheitsgurtaufroller zum Einbau in ein Fahrzeug mit:
einem Elektromotor (7), einer Spule (5), die einen Sicherheitsgurt (3) zur Insassenrückhaltung durch den Antrieb des Elektromotors (7) auf- und abwickeln kann, und einer Steuereinrichtung (20) zum Steuern des Elektromotors (7), wobei
in Fällen, in denen eine Startbedingung erfüllt ist, die durch den Zustand des Sicherheitsgurts (3) relativ zu einem Fahrzeuginsassen und den Zustand einer dem Sicherheitsgurt (3) entsprechenden Fahrzeugtür (50) festgelegt ist, die Steuereinrichtung (20) den Elektromotor (7) so steuert, daß er in Gurtaufwickelrichtung dreht, so daß die Motorleistung des Elektromotors (7) gemäß dem Erfüllungsmuster der Startbedingung variiert wird,
**dadurch gekennzeichnet, daß** in Fällen, in denen sich die dem Sicherheitsgurt (3) entsprechende Fahrzeugtür (50) im geschlossenen Zustand befindet, wenn das Anlegen des Sicherheitsgurts (3) aufgehoben ist, die Steuereinrichtung (20) den Elektromotor (7) so steuert, daß er in Gurtaufwickelrichtung mit einer ersten Motorleistung (P2) dreht, während in Fällen, in denen sich die dem Sicherheitsgurt (3) entsprechende Fahrzeugtür (50) im offenen Zustand befindet, wenn das Anlegen des Sicherheitsgurts aufgehoben ist, die Steuereinrichtung den Elektromotor (7) so steuert, daß er in Gurtaufwickelrichtung mit einer zweiten Motorleistung (P1) dreht, die größer als die erste Motorleistung (P2) ist.

2. Sicherheitsgurtaufroller nach Anspruch 1, wobei in Fällen, in denen das Anlegen des Sicherheitsgurts (3) aufgehoben ist, wenn die dem Sicherheitsgurt (3) entsprechende Fahrzeugtür vom geschlossenen Zustand zum offenen Zustand wechselt, die Steuereinrichtung (20) den Elektromotor (7) so steuert, daß er in Gurtaufwickelrichtung dreht, während in Fällen, in denen der Sicherheitsgurt (3) angelegt ist, wenn die dem Sicherheitsgurt entsprechende Fahrzeugtür (50) vom geschlossenen Zustand zum offenen Zustand wechselt, die Steuereinrichtung (20) den Elektromotor (7) so steuert, daß er nicht dreht.

3. Sicherheitsgurtaufroller zum Einbau in ein Fahrzeug mit:
einem Elektromotor (7), einer Spule (5), die einen Sicherheitsgurt (3) zur Insassenrückhaltung durch den Antrieb des Elektromotors (7) auf- und abwickeln kann, und einer Steuereinrichtung (20) zum Steuern des Elektromotors (7), wobei
in Fällen, in denen eine Startbedingung erfüllt ist, die durch den Zustand des Sicherheitsgurts (3) relativ zu einem Fahrzeuginsassen und den Zustand einer dem Sicherheitsgurt (3) entsprechenden Fahrzeugtür (50) festgelegt ist, die Steuereinrichtung (20) den Elektromotor (7) so steuert, daß er in Gurtaufwickelrichtung dreht, so daß die Motorleistung des Elektromotors (7) gemäß dem Erfüllungsmuster der Startbedingung variiert wird,
**dadurch gekennzeichnet, daß** in Fällen, in denen das Anlegen des Sicherheitsgurts (3) aufgehoben ist, wenn die dem Sicherheitsgurt (3) entsprechende Fahrzeugtür vom geschlossenen Zustand zum offenen Zustand wechselt, die Steuereinrichtung (20) den Elektromotor (7) so steuert, daß er in Gurtaufwickelrichtung dreht, während in Fällen, in denen der Sicherheitsgurt (3) angelegt ist, wenn die dem Sicherheitsgurt entsprechende Fahrzeugtür (50) vom geschlossenen Zustand zum offenen Zustand wechselt, die Steuereinrichtung (20) den Elektromotor (7) so steuert, daß er nicht dreht.

4. Sicherheitsgurtaufroller nach Anspruch 1, 2 oder 3, wobei
in Fällen, in denen das Anlegen des Sicherheitsgurts (3) am Fahrzeuginsassen aufgehoben ist, die Steuereinrichtung (20) den Elektromotor (7) so steuert, daß er in Gurtaufwickelrichtung dreht, so daß die Motorleistung des Elektromotors (7) gemäß dem Zustand der dem Sicherheitsgurt (3) entsprechenden Fahrzeugtür (50) variiert wird.

5. Sicherheitsgurtvorrichtung zum Einbau in ein Fahrzeug mit:
einem Sicherheitsgurtschloß (16), das am Fahrzeug befestigt ist, einer Zunge (12), die an einem Sicherheitsgurt (3) angebracht und am Sicherheitsgurtschloß (16) verriegelt ist, wenn der Sicherheitsgurt (3) angelegt ist, einem Detektionssensor (32) zum Detektieren, daß die Zunge (12) am Sicherheitsgurtschloß (16) verriegelt ist, und einem Sicherheitsgurtaufroller nach einem der Ansprüche 1 bis 4, und wobei
in Fällen, in denen eine Startbedingung erfüllt ist, die durch den Zustand des Sicherheitsgurts (3) relativ zum Fahrzeuginsassen und den Zustand einer dem Sicherheitsgurt (3) entsprechenden Fahrzeugtür (50) festgelegt ist, die Steuereinrichtung (20) auf der Grundlage von Informationen, die durch den Detektionssensor (32) detektiert werden, bestimmt, ob der Sicherheitsgurt (3) von einem Fahrzeuginsassen angelegt ist, und die Steuereinrichtung (20) den Elektromotor (7) so steuert, daß er in Gurtaufwickelrichtung dreht, so daß die Motorleistung des Elektromotors (7) gemäß dem Erfüllungsmuster der Startbedingung variiert wird.

6. Sicherheitsgurtvorrichtung nach Anspruch 5, wobei in Fällen, in denen das Anlegen des Sicherheitsgurts (3) aufgehoben ist, die Steuereinrichtung (20) den Elektromotor (7) so steuert, daß er in Gurtaufwickelrichtung dreht, so daß die Motorleistung des Elektromotors (7) gemäß dem Zustand der dem Sicherheitsgurt (3) entsprechenden Fahrzeugtür (50) variiert wird.

7. Sicherheitsgurtvorrichtung nach Anspruch 5 oder 6, wobei in Fällen, in denen sich die dem Sicherheitsgurt (3) entsprechende Fahrzeugtür (50) im geschlossenen Zustand befindet, wenn auf der Grundlage der durch den Detektionssensor (32) detektierten Informationen bestimmt wird, daß das Anlegen des Sicherheitsgurts (3) aufgehoben ist, die Steuereinrichtung (20) den Elektromotor (7) so steuert, daß er in Gurtaufwickelrichtung mit einer ersten Motorleistung dreht, während in Fällen, in denen sich die dem Sicherheitsgurt (3) entsprechende Fahrzeugtür (50) im offenen Zustand befindet, wenn auf der Grundlage der durch den Detektionssensor (32) detektierten Informationen bestimmt wird, daß das Anlegen des Sicherheitsgurts (3) aufgehoben ist, die Steuereinrichtung (20) den Elektromotor (7) so steuert, daß er in Gurtaufwickelrichtung mit einer zweiten Motorleistung dreht, die größer als die erste Motorleistung ist.

8. Sicherheitsgurtvorrichtung nach einem der Ansprüche 5 bis 7, wobei
in Fällen, in denen auf der Grundlage der durch den Detektionssensor (32) detektierten Informationen bestimmt wird, daß das Anlegen des Sicherheitsgurts (3) aufgehoben ist, wenn die dem Sicherheitsgurt (3) entsprechende Fahrzeugtür (50) vom geschlossenen Zustand zum offenen Zustand wechselt, die Steuereinrichtung (20) den Elektromotor (7) so steuert, daß er in Gurtaufwickelrichtung dreht, während in Fällen, in denen auf der Grundlage der durch den Detektionssensor (32) detektierten Informationen bestimmt wird, daß der Sicherheitsgurt (3) angelegt ist, wenn die dem Sicherheitsgurt (3) entsprechende Fahrzeugtür (50) vom geschlossenen Zustand zum offenen Zustand wechselt, die Steuereinrichtung (20) den Elektromotor (7) so steuert, daß er nicht dreht.

9. Fahrzeug mit einer Sicherheitsgurtvorrichtung nach einem der Ansprüche 5 bis 8, wobei
die Sicherheitsgurtvorrichtung in einem Unterbringungsraum im Fahrzeug untergebracht ist.

## Revendications

1. Rétracteur de ceinture de sécurité destiné à être installé dans un véhicule comprenant :
un moteur électrique (7) ; une bobine (5) qui est capable d'enrouler et de dérouler une ceinture de sécurité (3) pour la restriction d'occupant en association à l'entraînement dudit moteur électrique (7) ; et un moyen de commande (20) pour commander ledit moteur électrique (7), dans lequel
au cas où une condition de démarrage qui est définie par l'état de ladite ceinture de sécurité (3) par rapport à un occupant de véhicule et l'état d'une portière de véhicule (50) correspondant à ladite ceinture de sécurité (3) est satisfaite, ledit moyen de commande (20) commande ledit moteur électrique (7) pour tourner dans la direction d'enroulement de ceinture de sorte que le rendement de moteur dudit moteur électrique (7) soit varié selon le modèle de satisfaction de la condition de démarrage,
**caractérisé en ce que**
au cas où la portière de véhicule (50) correspondant à la ceinture de sécurité (3) est dans l'état fermé lorsque l'utilisation de ladite ceinture de sécurité (3) est annulée, ledit moyen de commande (20) commande ledit moteur électrique (7) pour tourner dans la direction d'enroulement de ceinture avec un premier rendement de moteur (P2), alors que, au cas où la portière de véhicule (50) correspondant à la ceinture de sécurité (3) est dans l'état ouvert lorsque l'utilisation de ladite ceinture de sécurité est annulée, ledit moyen de commande commande ledit moteur électrique (7) pour tourner dans la direction d'enroulement de ceinture avec un second rendement de moteur (P1) supérieur audit premier rendement de moteur (P2).

2. Rétracteur de ceinture de sécurité selon la revendication 1, dans lequel
au cas où l'utilisation de ladite ceinture de sécurité (3) est annulée lorsque la portière de véhicule correspondant à la ceinture de sécurité (3) est changée de l'état fermé à l'état ouvert, ledit moyen de commande (20) commande ledit moteur électrique (7) pour tourner dans la direction d'enroulement de ceinture, alors que, au cas où la ceinture de sécurité (3) est utilisée lorsque la portière de véhicule (50) correspondant à la ceinture de sécurité est changée de l'état fermé à l'état ouvert, ledit moyen de commande (20) commande ledit moteur électrique (7) pour ne pas tourner.

3. Rétracteur de ceinture de sécurité destiné à être installé dans un véhicule comprenant :
un moteur électrique (7) ; une bobine (5) qui est capable d'enrouler et de dérouler une ceinture de sécurité (3) pour la restriction d'occupant en association à l'entraînement dudit moteur électrique (7) ; et un moyen de commande (20) pour commander ledit moteur électrique (7), dans lequel
au cas où une condition de démarrage qui est définie par l'état de ladite ceinture de sécurité (3) par rapport à un occupant de véhicule et l'état d'une portière de véhicule (50) correspondant à ladite ceinture de sécurité (3) est satisfaite, ledit moyen de commande (20) commande ledit moteur électrique (7) pour tourner dans la direction d'enroulement de ceinture de sorte que le rendement de moteur dudit moteur électrique (7) soit varié selon le modèle de satisfaction de la condition de démarrage,
**caractérisé en ce que**
au cas où l'utilisation de ladite ceinture de sécurité (3) est annulée lorsque la portière de véhicule correspondant à la ceinture de sécurité (3) est changée de l'état fermé à l'état ouvert, ledit moyen de commande (20) commande ledit moteur électrique (7) pour tourner dans la direction d'enroulement de ceinture, alors que, au cas où la ceinture de sécurité (3) est utilisée lorsque la portière de véhicule (50) correspondant à la ceinture de sécurité est changée de l'état fermé à l'état ouvert, ledit moyen de commande (20) commande ledit moteur électrique (7) pour ne pas tourner.

4. Rétracteur de ceinture de sécurité selon la revendication 1, 2 ou 3 dans lequel
au cas où l'utilisation de ladite ceinture de sécurité (3) sur l'occupant de véhicule est annulée, ledit moyen de commande (20) commande ledit moteur électrique (7) pour tourner dans la direction d'enroulement de ceinture de sorte que le rendement de moteur dudit moteur électrique (7) soit varié selon l'état de la portière de véhicule (50) correspondant à la ceinture de sécurité (3).

5. Appareil de ceinture de sécurité destiné à être installé dans un véhicule comprenant :
une boucle de ceinture de sécurité (16) fixée au véhicule ; une languette (12) qui est fixée à une ceinture de sécurité (3) et est verrouillée sur ladite boucle de ceinture de sécurité (16) lorsque ladite ceinture de sécurité (3) est utilisée, 1 un capteur de détection (32) pour détecter que ladite languette (12) est verrouillée sur ladite boucle de ceinture de sécurité (16), et un rétracteur de ceinture de sécurité selon l'une quelconque des revendications 1 à 4, et dans lequel
au cas où une condition de démarrage qui est définie par l'état de ladite ceinture de sécurité (3) par rapport à l'occupant de véhicule et l'état d'une portière de véhicule (50) correspondant à ladite ceinture de sécurité (3) est satisfaite, ledit moyen de commande (20) détermine si oui ou non ladite ceinture de sécurité (3) est utilisée par un occupant de véhicule sur la base des informations détectées par ledit capteur de détection (32), 1 et ledit moyen de commande (20) commande ledit moteur électrique (7) pour tourner dans la direction d'enroulement de ceinture de sorte que le rendement de moteur dudit moteur électrique (7) soit varié selon le modèle de satisfaction de la condition de démarrage.

6. Appareil de ceinture de sécurité selon la revendication 5, dans lequel
au cas où l'utilisation de ladite ceinture de sécurité (3) est annulée, ledit moyen de commande (20) commande ledit moteur électrique (7) pour tourner dans la direction d'enroulement de ceinture de sorte que le rendement de moteur dudit moteur électrique (7) soit varié selon l'état de la portière de véhicule (50) correspondant à la ceinture de sécurité (3).

7. Appareil de ceinture de sécurité selon la revendication 5 ou 6, dans lequel
au cas où la portière de véhicule (50) correspondant à la ceinture de sécurité (3) est dans l'état fermé lorsqu'il est déterminé que l'utilisation de ladite ceinture de sécurité (3) est annulée sur la base des informations détectées par ledit capteur de détection (32), ledit moyen de commande (20) commande ledit moteur électrique (7) pour tourner dans la direction d'enroulement de ceinture avec un premier rendement de moteur, alors que, au cas où la portière de véhicule (50) correspondant à la ceinture de sécurité (3) est dans l'état ouvert lorsqu'il est déterminé que l'utilisation de ladite ceinture de sécurité (3) est annulée sur la base des informations détectées par ledit capteur de détection (32), ledit moyen de commande (20) commande ledit moteur électrique (7) pour tourner dans la direction d'enroulement de ceinture avec un second rendement de moteur supérieur audit premier rendement de moteur.

8. Appareil de ceinture de sécurité selon l'une quelconque des revendications 5 à 7, dans lequel
au cas où il est déterminé que l'utilisation de ladite ceinture de sécurité (3) est annulée sur la base des informations détectées par ledit capteur de détection (32) lorsque la portière de véhicule (50) correspondant à la ceinture de sécurité (3) est changée de l'état fermé à l'état ouvert, ledit moyen de commande (20) commande ledit moteur électrique (7) pour tourner dans la direction d'enroulement de ceinture, alors que, au cas où il est déterminé que la ceinture de sécurité (3) est utilisée sur la base des informations détectées par ledit capteur de détection (32) lorsque la portière de véhicule (50) correspondant à la ceinture de sécurité (3) est changée de l'état fermé à l'état ouvert, ledit moyen de commande (20) commande ledit moteur électrique (7) pour ne pas tourner.

9. Véhicule avec un appareil de ceinture de sécurité selon l'une quelconque des revendications 5 à 8, dans lequel
ledit appareil de ceinture de sécurité est logé dans un espace de logement dans le véhicule.
